(19) **Europäisches Patentamt European Patent Office Office européen des brevets**

(11) **EP 4 220 518 B1**

(12) **EUROPEAN PATENT SPECIFICATION**

(45) Date of publication and mention
of the grant of the patent:
**26.11.2025 Bulletin 2025/48**

(21) Application number: **22748906.9**

(22) Date of filing: **24.01.2022**

(51) International Patent Classification (IPC):
*G06Q 20/40* (2012.01)   *G06F 21/32* (2013.01)
*G06Q 20/20* (2012.01)   *G06Q 20/32* (2012.01)
*G06Q 20/38* (2012.01)   *G07G 1/00* (2006.01)

(52) Cooperative Patent Classification (CPC):
**G06F 21/32; G06Q 20/202; G06Q 20/206;
G06Q 20/322; G06Q 20/3263; G06Q 20/3825;
G06Q 20/3829; G06Q 20/389; G06Q 20/40145;
G06Q 20/40975; G07G 1/0009**

(86) International application number:
**PCT/CN2022/073349**

(87) International publication number:
**WO 2022/166627 (11.08.2022 Gazette 2022/32)**

(54) **BLOCKCHAIN NETWORK-BASED DEVICE MANAGEMENT METHOD, RELATED DEVICE, AND STORAGE MEDIUM**

VERFAHREN ZUR VERWALTUNG EINER VORRICHTUNG AUF BLOCKCHAIN-NETZWERKBASIS, ZUGEHÖRIGE VORRICHTUNG UND SPEICHERMEDIUM

PROCÉDÉ DE GESTION DE DISPOSITIF BASÉ SUR UN RÉSEAU DE CHAÎNE DE BLOCS, DISPOSITIF ASSOCIÉ ET SUPPORT DE STOCKAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.02.2021 CN 202110143735**

(43) Date of publication of application:
**02.08.2023 Bulletin 2023/31**

(73) Proprietor: **Tencent Technology (Shenzhen)
Company Limited
Shenzhen, Guangdong, 518057 (CN)**

(72) Inventors:
• **ZHANG, Jinming**
  **Shenzhen, Guangdong 518057 (CN)**
• **ZHOU, Jun**
  **Shenzhen, Guangdong 518057 (CN)**
• **GUO, Runzeng**
  **Shenzhen, Guangdong 518057 (CN)**
• **WANG, Shaoming**
  **Shenzhen, Guangdong 518057 (CN)**
• **SUN, Shiyou**
  **Shenzhen, Guangdong 518057 (CN)**

(74) Representative: **Novagraaf International SA
Chemin de l'Echo 3
1213 Onex, Geneva (CH)**

(56) References cited:
CN-A- 109 327 457    CN-A- 109 327 457
CN-A- 109 660 330    CN-A- 111 027 036
CN-A- 112 465 516    US-A1- 2020 403 986

**Description**

RELATED APPLICATION

This application claims priority to Chinese Patent Application No. 202110143735.X, entitled "METHOD FOR DEVICE MANAGEMENT BASED ON BLOCKCHAIN NETWORK, RELATED APPARATUS, AND STORAGE MEDIUM" and filed with the China National Intellectual Property Administration on February 02, 2021.

FIELD OF THE TECHNOLOGY

The present disclosure relates to the technical field of computers and blockchains, and in particular to technology of device management based on a blockchain network.

BACKGROUND OF THE DISCLOSURE

Development of computer technologies renders mobile payments increasingly common in daily life. For example, a merchant can acquire payment for commodities directly through a fingerprint, a facial image, or other data provided by a consumer.

In conventional facial recognition payment, a feature acquiring device for collecting facial images may correspond to one payment application client running in a terminal. In a case that multiple payment application clients need to run on the terminal, it is necessary to install multiple feature acquiring devices corresponding to the multiple payment application clients, which render payment inconvenient payment between the merchant and the consumer. Thus, it is a research hotspot how to support different application clients in the terminal using one feature acquiring device. Patent document with publication No. CN109660330 A discloses a method for identity authentication within a blockchain, and patent document with publication No. CN109327457 A discloses a method for identity authentication on IoT device based on a blockchain.

SUMMARY

A method for device management based on a blockchain network, a related apparatus, and a storage medium are provided according to embodiments of the present disclosure provide. Different application clients in the terminal are supported using one feature acquiring device, and hence fewer feature acquiring devices are deployed, which improves convenience. The invention is defined by the independent claims. Further embodiments are described by the dependent claims.

BRIEF DESCRIPTION OF THE DRAWINGS

For clearer illustration of the technical solutions according to embodiments of the present disclosure or conventional techniques, hereinafter briefly described are the drawings to be applied in embodiments of the present disclosure or conventional techniques. Apparently, the drawings in the following descriptions are only some embodiments of the present disclosure, and other drawings may be obtained by those skilled in the art based on the provided drawings without creative efforts.

Figure 1a is a schematic architectural diagram of a system for device management based on a blockchain network according to an embodiment of the present disclosure.

Figure 1b is a schematic structural diagram of a blockchain according to an embodiment of the present disclosure.

Figure 1c is a schematic diagram of a process of generating a new block according to an embodiment of the present disclosure.

Figure 2 is a schematic flowchart of a method for device management based on a blockchain network according to an embodiment of the present disclosure.

Figure 3 is a schematic diagram of a relationship between blocks and index according to an embodiment of the present disclosure.

Figure 4 is a schematic flowchart of a method for device management based on a blockchain network according to another embodiment of the present disclosure.

Figure 5a is a schematic flowchart of a method for device management based on a blockchain network according to another embodiment of the present disclosure.

Figure 5b is a schematic flowchart of a process of storing device information of an image acquiring device into a blockchain network according to an embodiment of the present disclosure.

Figure 6 is a schematic block diagram of an apparatus for device management based on a blockchain network according to an embodiment of the present disclosure.

Figure 7 is a schematic block diagram of a terminal according to an embodiment of the present disclosure.

DESCRIPTION OF EMBODIMENTS

Hereinafter technical solutions in embodiments of the present disclosure are described clearly and completely in conjunction with the drawings in embodiments of the present closure. Apparently, the described embodiments are only some rather than all of the embodiments of the present disclosure. Any other embodiments obtained based on the embodiments of the present disclosure by those skilled in the art without any creative effort fall within the scope of protection of the present disclosure.

A method for device management based on a blockchain network is provided according to embodiment of the present disclosure. In response to a triggering operation for associating a feature acquiring device with a target application client in at least two application clients, a terminal may enable node devices in the blockchain network to authenticate a feature acquiring device according to device information of such feature acquiring device. Accordingly, the target application client is associated with the feature acquiring device when it is determined that the feature acquiring device passes the authentication. Hence, different application clients in the terminal can be supported using one feature acquiring device, which simplifies deployment of feature acquiring devices and improves convenience.

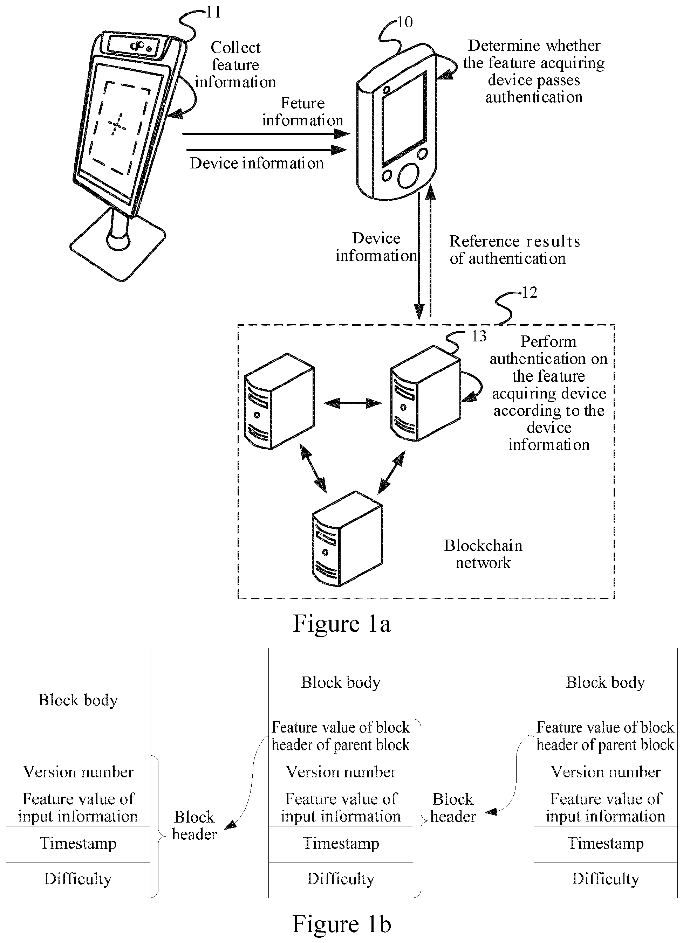

Reference is made to Figure 1a, which is a schematic architectural diagram of a system for device management based on a blockchain network according to an embodiment of the present disclosure. The system comprises a terminal 10, a feature acquiring device 11, and a blockchain network 12. The blockchain network 12 comprises multiple node devices 13, and any node device in the blockchain network 12 may be configured to provide a service for a corresponding application client in the terminal 10. In an embodiment, a terminal 10 can support operation of different application clients. The application clients may be payment application clients, such as payment application client 1, payment application client 2, and payment application client 3. The payment application client may be a WeChat application client or another payment application client, which is not limited herein. The feature acquiring device 11 is configured to collect feature information, and may be arranged in the terminal 10 or independent from the terminal 10. Herein the feature acquiring device 11 independent from the terminal 10 is taken as a main example for detailed description. The feature information collected by the feature acquiring device 11 may be user's biometric features such as facial images, fingerprint features, vocal print features, iris features, or the like. Correspondingly, the feature acquiring device 11 may be an image acquiring device, a fingerprint acquiring device, a vocal-print acquiring device, an iris-feature acquiring device, or the like. Herein the image acquiring device is taken as a main example of the feature acquiring device for detailed description, and cases of other feature acquiring devices may refer to the case of the image acquiring device. The image acquiring device may be, for example, a device denoted by "11" in Figure 1a.

In an embodiment, the feature acquiring device 11 is an image acquiring device for collecting facial images, and the facial images collected by the feature acquiring device 11 can be used in identity authentication. Specifically, the feature acquiring device 11 may scan a face of a user so as to acquire a facial image of the user, and then transmit the facial image to a terminal 10. The terminal 10 transmits the received facial images to a node device in a blockchain network 12. After receiving the facial image, the node device may analyze the facial image to implement the identity authentication on the user. Herein a user-initiated operation such as a payment operation or an unlocking operation may be executed after the node device determines that the user passes the identity authentication. An application client in the terminal 10 should be associated with the feature acquiring device 11 such that a user can select it for payment. Hence, when the application client in the terminal 10 is applicable to user's online payment for a commodity, the application client may be first associated with and the feature acquiring device 11.

In an embodiment, a terminal 10 may respond to a triggering operation for associating a feature acquiring device 11 with a target application client. In response to the triggering operation, the terminal 10 may acquire device information of the feature acquiring device 11. The device information may carry a signature. After acquiring the device information carrying the signature, the terminal 10 may transmit such device information to a blockchain network 12, so that node devices in the blockchain network 12 can authenticate the feature acquiring device 11 according to the device information.

The terminal 10 may acquire authentication result(s) of the authentication, each returned by a corresponding node device, of the authentication on the feature acquiring device 11 from the blockchain network, and determine whether the feature acquiring device 11 passes the authentication according to the authentication results. When it is determined that the feature acquiring device 11 passes the authentication, the feature acquiring device 11 is associated with the target application client.

In an embodiment, when transmitting the device information to the blockchain network 12, a terminal 10 may transmit the device information to any node device in the blockchain network 12. In a case that the device information is sent to a node device, a network address of such node device may be acquired to determine whether the acquired network address is consistent to a preset network address. In case of positive determination, the node device performs authentication on the feature acquiring device according to the device information, and then transmits the device information to other node devices in the blockchain network, in order to enable the other node devices to perform device authentication. In case of negative determination, the device information may be sent to a target node device 13 which is in the blockchain network and is indicated by the preset network address. The target node device 13 performs authentication on the feature acquiring device according to the device information, and then transmits the device information to other node devices in the blockchain network, in order to enable the other node devices to perform device authentication.

In an embodiment, when a terminal 10 acquires the authentication result(s) of the authentication each returned by the corresponding node device, the terminal 10 may determine whether the feature acquiring device 11 passes the authentication according to the authentication results. Each authentication result may indicate that the feature acquiring device 11 passes the authentication or the feature acquiring device 11 does not pass the authentication. Then, the terminal 10 may count a first quantity of the authentication results each of which indicate that the corresponding node device determines that the feature acquiring device 11 passes the authentication, and determine a second quantity of node devices reporting normality in the blockchain network 12. Thereby, the terminal 10 determines whether the feature acquiring device 11 passes the authentication according to the first quantity and the second quantity. For example, it is determined that the feature acquiring device 11 passes the authentication in a case that the first quantity is equal to the second quantity, and it is determined that the feature acquiring device 11 does not pass the authentication in a case that the first quantity is less than the second quantity. In an embodiment, the second quantity may be determined according to verification feedback(s) acquired by the terminal 10. Each verification feedback is a result fed back from a node device, which performs verification on the device information of the feature acquiring device in a case that the device information is transmitted from the target node device 13 to the other node devices 2. For example, the second quantity is equal to 3 in a case that there are three verification feedbacks acquired by the terminal 10.

Therefore, when authenticating the feature acquiring device, each node in the blockchain network can be aware of the device information of the feature acquiring device. Further, the authentication does not depend on a private protocol of a certain organization but is a joint result obtained by multiple node devices in the blockchain network. Hence, data security is guaranteed, and data validity would not be influenced due to a data source being manipulated.

In an embodiment, when determining that the feature acquiring device 11 passes the authentication, a terminal 10 may store the device information of the feature acquiring device into the blockchain network 12. The terminal 10 may acquire a storage location of the device information in the blockchain network 12, obtain an index for fetching the device information of the feature acquiring device, and store the index. In an embodiment, a user performs a relevant operation by using the feature acquiring device 11, for example, the relevant operation is a payment operation or an unlocking operation, and the user selects the target application client in the terminal 10 for online payment for a commodity or unlocking a gate. In such case, it may be necessary to perform the authentication, e.g., check whether the feature acquiring device 11 conforms to a designated standard, such as a national standard. The subsequent payment operation or unlocking operation can be performed through the target application client only when the feature acquiring device 11 conforms to the designated standard. For example, the terminal 10 receives a request (i.e., query request) for fetching the device information of the feature acquiring device 11, acquires the index of the device information, then determines the storage location of the device information in the blockchain network 12 according to the index, and then acquires the device information from the storage location. After acquiring the device information, the terminal 10 may determine whether a device signature comprised in the query request matches a device signature in the device information. In case of matching, it can be determined that the feature acquiring device 11 conforms to the designated standard, and hence the relevant operation can be executed subsequently.

A quantity of nodes (one node device serves as a node) as shown in Figure 1a is only illustrative, and the quantity of deployed nodes may be arbitrary according to practical needs.

There is a node identifier corresponding to each node in the blockchain network, and each node in the blockchain network may store node identifiers of other nodes in the blockchain network, such that a generated block can be broadcast to other nodes in the blockchain network according to the node identifiers. Each node may maintain a list of node identifiers as shown in Table 1, and node names and node identifiers are correspondingly stored in the node device identifier list. Each node identifier may be an Internet Protocol (IP) address or other information which can be used to identify the nodes. Herein only the IP addresses are taken as an example in Table 1. For example, Table 1 is the list maintained by node 1.

When node 1 generates a new block, the new block can be broadcast to other nodes in the blockchain network according to the node identifier of each node in Table 1.

Table 1

| Node name | Node identifier |
|---|---|
| Node 1 | 117.114.151.174 |
| Node 2 | 117.116.189.145 |
| ... | ... |
| Node N | 119.123.789.258 |

Each node in the blockchain system stores the same blockchain. Reference is made to Figure 1b. The blockchain comprises multiple blocks. A genesis block comprises a block header and a block body, the block header stores a feature value of input information, a version number, a timestamp, and a difficulty value, and the block body stores the input information. Similarly, a next block also comprises a block header and a block body, and the block header stores a feature value of input information of the current block, a feature value of the block header of a parent block, a version number, a timestamp, and a difficulty value. The other blocks can be deduced by analogy. Thereby, data stored in each block of the blockchain is associated with the data stored in its parent block, which ensures security of information inputted into the blocks.

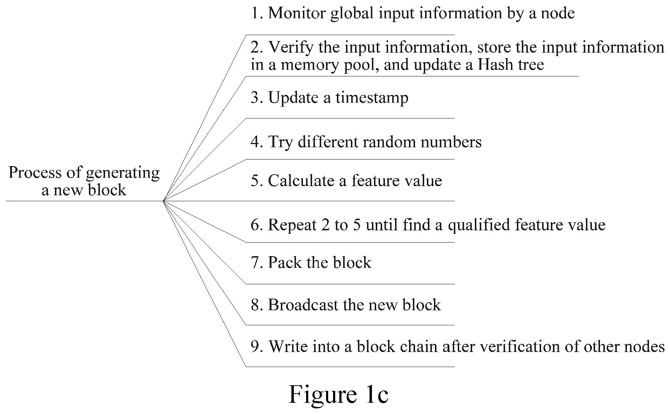

Reference is made to Figure 1c. When generating a block in the blockchain, a node in which the blockchain is located receives and verifies input information, then stores the input information into a memory pool, and update a hash tree which is of the block and is configured to record the input information. Afterwards, the timestamp is updated to be a moment when the input information is received. Different random numbers are tried to calculate different feature values, until the calculated feature value satisfies the following condition:

$$SHA256\big(SHA256(version + prev\_hash + merkle\_root + ntime + nbits + x)\big) < TARGET$$

$SHA256$ is an algorithm used for calculating the feature value, $version$ (i.e., a version number) carries version information of a relevant block protocol in the blockchain, $prev\_hash$ represents a feature value of the block header of the parent block of a current block, merkle_root represents a feature value of input information, $ntime$ represents a moment at which the timestamp is updated, $nbits$ represents a current difficulty, which is constant within a time period and is refreshed after exceeding the time period, $x$ is the random number, $TARGET$ represents a threshold of the feature value, and the threshold may be determined according to $nbits$.

Thereby, when the random umber satisfying the above condition is determined through calculation, the information may be correspondingly stored, and a block header and a block body are generated to obtain the current block. Subsequently, the node at which the blockchain is located transmits the newly generated block respectively to other nodes in the blockchain system, in which the node is located, according to node identifiers of these nodes. The other nodes verify the newly generated block, and add the newly generated block into the blockchain stored thereon after the verification is successful.

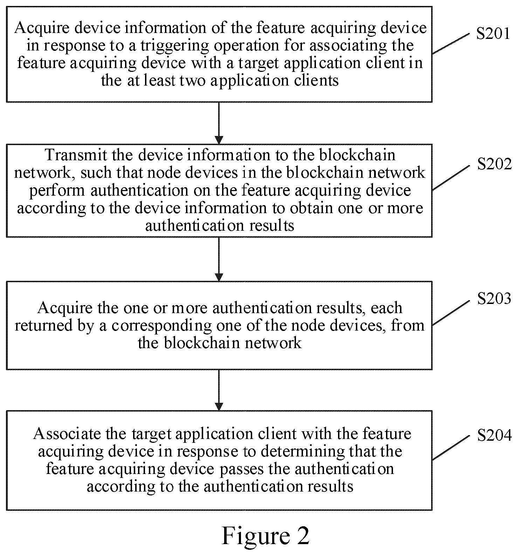

Reference is made to Figure 2, which is a schematic flowchart of a method for device management based on a blockchain network according to an embodiment of the present disclosure. The method is applicable to the foregoing terminal, on which at least two application clients run and which corresponds to a feature acquiring device. As shown in Figure 2, the method may comprise following steps S201 to S204.

In step S201, device information of the feature acquiring device is acquired in response to a triggering operation for associating the feature acquiring device with a target application client in the at least two application clients.

In an embodiment, when detecting that the at least two application clients are installed and run on a terminal, the terminal may determine that the triggering operation for associating the feature acquiring device with the target application client is detected . The target application client may be any one of the at least two application clients in the terminal. After detecting the triggering operation, the terminal may acquire the device information of the feature acquiring device, and transmit the device information of the feature acquiring device to the blockchain network. Afterwards, the method proceeds to step S202. The device information may include a manufacturer identifier, time of production, a manufacturer, a device model, a device identifier, a device parameter, a signature upon production, or the like, which is not limited herein.

In an embodiment, the feature acquiring device is an image acquiring device for collecting facial images. When detecting that at least two payment application clients are installed and run on the terminal, the terminal may determine that a triggering operation for associating image acquiring device with a target payment application client is detected. A user may perform online payment for a commodity through the payment application client and the user's facial image collected by the image acquiring device, and the target payment application client may be any one of the payment application clients in the terminal. After detecting the triggering operation, the terminal may acquire the device information of the feature acquiring device and transmit the device information of the feature acquiring device to the blockchain network.

In another embodiment, the feature acquiring device is an image acquiring device for collecting facial images. When detecting that at least two unlocking application clients are installed and run on the terminal, the terminal may determine that a triggering operation for associating image acquiring device with a target unlocking application client is detected. A user may unlock a gate through the unlocking application client and the user's facial image collected by the image acquiring device, and the target unlocking application client may be any one of the unlocking application clients in the terminal. After detecting the triggering operation, the terminal may acquire the device information of the feature acquiring device and transmit the device information of the feature acquiring device to the blockchain network.

In step S202, the device information is transmitted to the blockchain network, such that node devices in the blockchain network perform authentication on the feature acquiring device according to the device information to obtain one or more authentication results.

In an embodiment, upon acquiring the device information of the feature acquiring device, the terminal may transmit the device information to the blockchain network. In one embodiment, the terminal may transmit the device information carrying a signature to the blockchain network, so as to ensure security of the device information. The terminal may acquire the device information and a private key of the feature acquiring device from the feature acquiring device, signs the device information using the private key to obtain the device information carrying the signature, and then transmits the device information carrying the signature to the blockchain network. Alternatively, the terminal may acquire the device information carrying the signature directly from the feature acquiring device. In such case, the feature acquiring device signs the device information using the private key thereof to obtain the device information carrying the signature.

In an embodiment, when the terminal needs transmits the device information to the blockchain network, the device information node need to be directed to a node device of which a network address is consistent to a network address preset by the target application client. Such node device may be a target node device. The device information is sent to the target node device, such that the target node can perform authentication on the feature acquiring device according to the device information before other node devices in the blockchain network. The terminal may transmit the device information to an arbitrary node device in the blockchain network. In such case, when the terminal transmits the device information to a node device in the blockchain network, the network address of such node device may be acquired to determine whether the acquired network address is consistent with the preset network address. In a case that the acquired network address is consistent with the preset network address, such node device may perform the authentication on the feature acquiring device according to the device information, and then transmits the device information to other node devices in the blockchain network. Thereby, the other node devices can perform the authentication on the feature acquiring device according to the device information. In a case that the acquired network address is not consistent with the preset network address, the device information may be sent to the target node device, which indicated by the preset network address, through a repositioning strategy. Namely, the device information is sent again, but to a node device corresponding to the preset network address (i.e., the target node device), according to the preset network address. After receiving the device information of the feature acquiring device, the target node device can perform authentication on the feature acquiring device according to the device information, and then transmits the device information to other node devices in the blockchain network. Thereby, the other node devices can perform authentication on the feature acquiring device according to the device information.

In step S203, the one or more authentication results, each returned by a corresponding one of the node devices, are obtained from the blockchain network.

In an embodiment, the authentication result returned by each node device may indicate that the feature acquiring device passes the authentication, or the feature acquiring device does not pass the authentication. In one embodiment, a terminal may acquire each authentication result returned by the node devices and counts positive authentication results in the authentication results. The positive authentication result refers to the authentication result indicating that the corresponding node device determines that the feature acquiring device passes the authentication. A quantity of the positive authentication results may be called a first quantity. After determining the first quantity of the positive authentication results, the terminal further needs to determine a quantity of node devices reporting normality in the blockchain network. The quantity of the node devices reporting normality may be called a second quantity. Then, after determining the first quantity and the second quantity, the terminal may determine whether the feature acquiring device passes the authentication according to the first quantity and the second quantity.

In step S204, the target application client is associated with the feature acquiring device in response to determining that the feature acquiring device passes the authentication according to the authentication results.

In an embodiment, a terminal may establish association between the target application client and the feature acquiring device when determining that the feature acquiring device passes the authentication. For each of the at least two application clients in the terminal, associating such application client with the feature acquiring device refers to providing such application client in the terminal an access to feature information, which is from the feature acquiring device, when the feature acquiring device is invoked by the application client, to perform identity authentication on a user. After being associated with the feature acquiring device, the application client in the terminal may transmit the feature information to any node device in the blockchain network, such that the node device can analyze the feature information to implement the identity authentication. A user's corresponding operation can be executed after the node device determines that the user passes the identity authentication.

For example, it is assumed that the feature acquiring device is an image acquiring device for collecting facial images, and the target application client in the terminal is a payment application client. A user may perform an online payment for a commodity through the feature acquiring device, after the target application client and the feature acquiring device are associated. For example, the image acquiring device may scan a face of the user to acquire a facial image of the user. After acquiring the facial image, the image acquiring device may transmit the facial image of the user to the terminal, and the terminal transmits the received facial image to any node device in the blockchain network. After receiving the facial image, such node device may analyze the facial image to implement identity authentication on the user. After the user is determined to pass the identity authentication, the online payment may be executed using the corresponding application client. The terminal may have at least has two payment application clients, in other words, there is another payment application clients besides the target application client. In such case, the user is provided with two means for payment. In order to perform the payment, the user may select a payment means or a payment application client in advance.

In an embodiment, when determining that the feature acquiring device passes the authentication, the device information of the feature acquiring device is stored into the blockchain network. Data is stored in unit of blocks in each node device of the blockchain network, and data stored in each node device reporting normality is consistent. In a case that there are multiple pieces of device information, these pieces of the device information are stored in different blocks. Taking 5 pieces of device information as an example, a first piece of the device information may be stored in a first block, a second piece of the device information may be stored in a second block, and so on, and a fifth piece of the device information may be stored in a fifth block. Specifically, each piece of the device information may be stored in a following manner. Hereinafter it is taken as an example that the third piece of the device information is stored in a third block.

In an embodiment, in a case that the feature acquiring device is determined to pass the authentication, the target node device may store the acquired device information into a block body, calculate a merkle root of the device information, acquire a hash of the currently last block of in the blockchain, and then store the merkle root, the hash, and a current timestamp into a block header. The target node device combines the block header and the block body storing the device information as the third block, adds the third block into the blockchain stored in the target node device, and broadcasts the third block to other node devices in the blockchain network. Thereby, the other node devices can add the third block to blockchains maintained by them, respectively, such that the blockchains maintained by the node devices in the blockchain network are synchronized.

Hence, since the blockchain has properties of integrity and tamper-proof, it can be guaranteed that the device information acquired by the target node device is credible and is not manipulated, and that the device information stored on the blockchains cannot be manipulated. Thereby, safety and credibility of device management are improved.

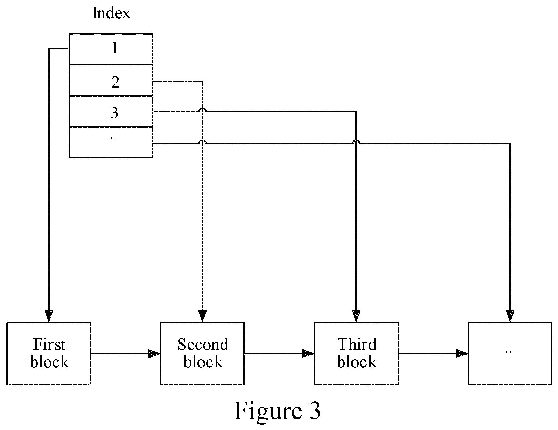

In an embodiment, after each piece of the device information is stored in the respective blockchain maintained at each node device in the blockchain network, the terminal may acquire a storage location of each piece of the device information in the blockchain network, and store the storage locations sequentially, so as to obtain and store an index for subsequent query on the pieces of the device information of the feature acquiring device. The index may be numbers, bit values (bits), or another type, which is not limited by the present disclosure. An example is as shown in Figure 3. There are 3 pieces of the device information, which are stored in a first block, a second block, and a third block, respectively, after the device information has been stored in the blockchain network. The terminal may acquire 3 storage locations corresponding to the 3 pieces of device information and store the three storage locations sequentially, so as to obtain and store the index for querying on the device information of the feature acquiring device. As shown in Figure 3, the index for the piece of the device information stored in the first block is "1", the index for the piece of the device information stored in the second block is "2", and the index for the piece of the device information stored in the third block is "3". Specifically, the terminal may store correspondence between the storage locations and the index. For example, Table 2 shows a correspondence between storage locations of pieces of the device information and indexes stored by the terminal. It can be seen from Table 2 that the piece of the device information is stored in the first block has an index of "1". Hence, when the terminal queries such piece of the device information, the terminal may acquire the index, i.e., "1", of the query, and then determine that such piece of the device information is stored in the first block of the blockchain network according to the index.

Table 2

| Storage location | Indexing information |
| --- | --- |
| First block | 1 |
| Second block | 2 |

(continued)

| Storage location | Indexing information |
|---|---|
| Third block | 3 |
| ... | ... |

In an embodiment, the terminal may receive a request (i.e., query request) for fetching the device information, and acquire the index for the device information according to the device information indicated by the query request. After acquiring the index for the device information, the terminal may determine a storage location of the device information in a blockchain network according to the index for the device information. Then, it is determined whether a device signature comprised in the query request matches a device signature in the device information. In case of positive determination, the stored device information of the feature acquiring device is acquired from the blockchain network according to the storage location for the device information.

After the terminal associates the target application client and the feature acquiring device, the target application client may run on the terminal. After the target application client is activated on the terminal, it may be necessary to check whether the feature acquiring device conforms to a designated standard. For example, the designated standard may be a national standard. A subsequent user operation may be executed only when the feature acquiring device is determined to conform to the designated standard. For example, it is assumed that the feature acquiring device is an image acquiring device for collecting facial images and the target application client is a payment application client. In a case that a user performs online payment for a commodity by using the target application client, it is necessary to check whether the image acquiring device conforms to the national standard. The target application client can execute the user's payment operation only when the image acquiring device conforms to the national standard.

In an embodiment, a specific manner of checking whether the feature acquiring device conforms to the designated standard may comprises following steps. The terminal may transmit a request for query on the device information of the feature acquiring device to the blockchain network, acquire the query index of the device information, and then determine a storage location of the device information of the feature acquiring device in the blockchain network according to the query index. The query request is configured to check whether the feature acquiring device conforms to the designated standard. In a case that the feature acquiring device is determined to conform to the designated standard, subsequent user operation can be executed. The query carries a production signature of the feature acquiring device, the production signature may be a signature generated when the feature acquiring device is produced. The terminal may add a signature of the target application client on the production signature of the feature acquiring device. The terminal may transmit the query request to any node device in the blockchain network, namely, may transmit the query request to the target node device or another node device. In a case that the terminal transmits the query request to the target node device, the target node device may receive the query request, and then acquire the index for the device information according to the device information indicated by the query request. After receiving the index for the device information, the terminal may determine the storage location of the device information in the blockchain network according to the index for the device information, and then acquires the stored device information from the storage location. After acquiring the stored device information, the terminal may determine whether a device signature comprised in the query request matches a device signature in the stored device information. In case of matching, it indicates that the feature acquiring device conforms to the designated standard, and the subsequent user operation can be executed. In case of not matching, it indicates that that the feature acquiring device does not conform to the designated standard, and the subsequent user operation cannot be executed.

Therefore, one feature acquiring device can support operation of different application clients in the terminal. In a case the user wishes to use the application client and the feature acquiring device to implement a certain user operation, the application client needs to check whether the feature acquiring device conforms to the designated standard. Herein the terminal may store the device information of the feature acquiring device into the blockchain network in a consortium blockchain. The consortium blockchain can enable the application client or a terminal having the application client to query validity of the feature acquiring device or query history modifications on the feature acquiring device, as long as the application client joins the consortium blockchain, so as to ensure validity of the feature acquiring device.

In an embodiment, after receiving the query request sent by the terminal and acquiring the device information, the target node device may transmit a verification request to other node devices, so as to check whether the acquired device information is complete. The verification request may comprise the device information acquired by the target node device. After receiving the verification request, another node device may acquire the device information from the blockchain it maintains, and compare the device information in the verification request with the acquired device information. In a case that the device information acquired from other node devices matches with the device information incorporated in the verification request, it is determined that the device information acquired from the target node device is complete.

For example, it is assumed that the terminal sends the verification request to node device A in a blockchain network. After acquiring the device information from a blockchain maintained at node device A, node device A may transmit the verification request comprising the device information to node device B, node device C, node device D, and node device E in the blockchain network. After receiving the verification request, node device B, node device C, node device D and node device E may acquire device information from blockchains that are maintained at these devices, respectively, so as to compare the acquired device information with the device information in the verification request. In case of consistency, a message indicating that the device information is complete may be returned to node device A, which informs node device A of the completeness (integrity) of the device information acquired by node device A. In a case that the device information is determined to be complete, the node device A compares a device signature in the acquired device information with a device signature in device information in the query request, so as to check whether the feature acquiring device conforms to the national standard.

In embodiments of the present disclosure, the terminal can acquire the device information of the feature acquiring device in response to the triggering operation for associating the feature acquiring device with the target application client in the at least two application clients, and then transmit the device information to the blockchain network, so that the node devices in the blockchain network perform authentication on the feature acquiring device according to the device information. The terminal acquires the one or more authentication results, each returned by the corresponding node device, from the blockchain network, and determines whether the feature acquiring device passes the authentication according to the one or more authentication results. When determining that the feature acquiring device passes the authentication, the target application client is associated with the feature acquiring device. The above solution can support operation of different application clients in the terminal using one feature acquiring device, which simplifies deployment of the feature acquiring devices and improves convenience.

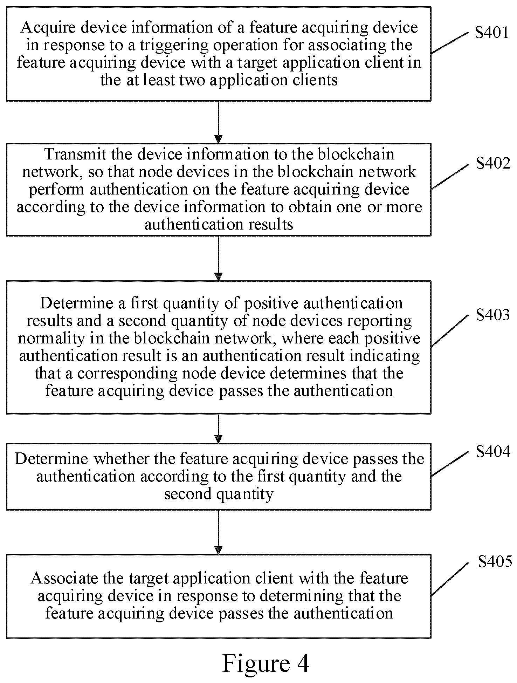

Reference is made to Figure 4, which is a schematic flowchart of a method for device management based on a blockchain network according to an embodiment of the present disclosure. The method is applicable to the foregoing terminal, on which at least two application clients run and which corresponds to a feature acquiring device. As shown in Figure 4, the method may comprise following steps S401 to S405.

In step S401, device information of a feature acquiring device is acquired in response to a triggering operation for associating the feature acquiring device with a target application client in the at least two application clients.

In step S402, the device information is transmitted to the blockchain network, so that node devices in the blockchain network perform authentication on the feature acquiring device according to the device information to obtain one or more authentication results.

Specific implementation of the steps S401 and S402 may refer forgoing description on the steps S201 and S202, and are not repeated herein.

In step S403, a first quantity of positive authentication results is determined, and a second quantity of node devices reporting normality in the blockchain network are determined, where each positive authentication result is an authentication result indicating that a corresponding node device determines that the feature acquiring device passes the authentication.

In an embodiment, a terminal may count positive authentication results to obtain the first quantity. Each positive authentication result is the authentication result indicating that the corresponding node device determines that the feature acquiring device passes the authentication. The terminal is required to determine both the first quantity of the positive authentication results and the second quantity of the node devices reporting normality in the blockchain network, so as to determine whether the feature acquiring device passes the authentication according to the first quantity and the second quantity.

In an embodiment, a specific manner for determined the first quantity may be as follows. Each node device in a blockchain network transmits its authentication result, which indicates that it has determined that the feature acquiring device passes the authentication or that it has determined that the feature acquiring device does not pass the authentication, to the terminal after the authentication is performed on the feature acquiring device according to device information. Then, the terminal may determine the first quantity according to the acquired authentication results. The terminal may count the acquired positive authentication results to obtain a number, namely, the first quantity.

In an embodiment, a specific manner of determining the second quantity is as follows. The terminal acquires verification feedbacks from the target node device, and the verification feedbacks are results determined through the node devices performing verification on the device information of the feature acquiring device in a case that the target node device transmits the device information to the other node devices. After acquiring the verification feedbacks from the target node device, the terminal may determine the second quantity of node devices reporting normality in the blockchain network according to the acquired verification feedbacks. The target node device may perform authentication on the feature acquiring device according to the device information, after receiving the device information of the feature acquiring device. The device information carries a signature, and is obtained in a following manner. The terminal acquires the device information and a device private key of the feature acquiring device from the feature acquiring device, and signs the device information using the device private key. Then, the target node device performs verification on the feature acquiring device according to the signed device information, that is, checks whether the signature in the signed device information is valid. In a case that the signature is valid, the target node device may transmit the signed device information (i.e., the device information carrying the signature) to the other node devices in the blockchain network, such that the other node devices can perform the verification on the feature acquiring device according to the signed device information. The other node devices also checks whether the signature in the signed device information is valid after receiving the signed device information. After perform such verification on the feature acquiring device according to the signed device information, the other node devices may feed the results of the verification back to the target node device.

These results may be used to indicate that the feature acquiring device passes the authentication or does not pass the authentication. After the target node device receives the results fed back from the other node devices, the terminal may acquire the verification feedbacks from the target node device, where each verification feedback refers to the result that a corresponding node device determines that the feature acquiring device passes verification or does not pass the verification. Hence, the terminal may determine the second quantity of the node devices reporting normality in the blockchain network according to a quantity of the verification feedbacks acquired from the target node device. Namely, after acquiring all verification feedbacks from the target node device, the terminal may count the verification feedbacks. A quantity obtained by counting the verification feedbacks is the second quantity of the node devices reporting normality in the blockchain network. In an alternative manner, the terminal determines that a quantity of the node device reporting normality in the blockchain network to be 1 when acquiring one verification feedback from the target node device, then increases the quantity by 1 when acquiring a new verification feedback from the target node device, and so on, which can also obtain the second quantity of the node devices reporting normality. For example, in a case that the last verification feedback acquired by the terminal from the target node device is the $5^{th}$ verification feedback, it can be determined that the second quantity of the node devices reporting normality is 5.

In step S404, it is determined whether the feature acquiring device passes the authentication according to the first quantity and the second quantity.

In step S405, the target application client is associated with the feature acquiring device in response to determining that the feature acquiring device passes the authentication.

In the steps S404 and S405, the terminal determines whether the feature acquiring device passes the authentication according to the first quantity and the second quantity after determining the first quantity of the positive authentication results and the second quantity of the node devices reporting normality in the blockchain network. For example, the terminal may compare the first quantity and the second quantity, and determine whether the feature acquiring device passes the authentication according to magnitude relationship between the first quantity and the second quantity. The terminal may determine that the feature acquiring device passes the authentication in a case that the first quantity is equal to the second quantity, and determine that the feature acquiring device does not pass the authentication in a case that the first quantity is less than the second quantity. The association between the target application client and the feature acquiring device may be established only when the terminal determines that the feature acquiring device passes the authentication.

In a specific application scenario, it is assumed that the feature acquiring device is an image acquiring device for collecting facial images of a user, and the terminal has executable payment application client 1 corresponding to the image acquiring device. Namely, the image acquiring device has been associated with payment application client 1, and the user can perform online payment for commodities through the payment application client 1 by using user's facial image collected by the image acquiring device. In a case that payment application client 2 is installed and to run in the terminal in the terminal and it is desirable that the user can perform the online payment for commodities through payment application client 2 by using the user's facial image collected by the image acquiring device, the image acquiring device is required to be further associated with payment application client 2. Similarly, in a case than more payment application clients are installed in the terminal, each of these payment application clients cannot be used to perform such online payment for commodities unless being associated with the image acquiring device. According to the foregoing solution, the terminal can support respective payment of at least two payment application clients, and hence a facial recognition device (i.e., an image acquiring device) deployed at a merchant can support multiple payment agencies. It is not necessary that the merchant purchases multiple facial recognition devices, which simplifies deployment of facial recognition devices. A cost of the merchant is effectively reduced, and the payment is more convenient.

In an embodiment, a device manufacturer of the image acquiring device may store the device information of the image acquiring device into the blockchain network when the image acquiring device passes authentication upon production, in order to ensure that terminal support payment of multiple payment application clients by using one image acquiring device. Any node device in the blockchain network may provide a service for a payment application client in the terminal. Before the device information of the image acquiring device is stored into the blockchain network, the payment application client which is in the terminal and is for online payment using the image acquiring device may be registered in the blockchain network first, and the payment application client cannot store the device information of the image acquiring device into the blockchain network unless being registered in the blockchain network.

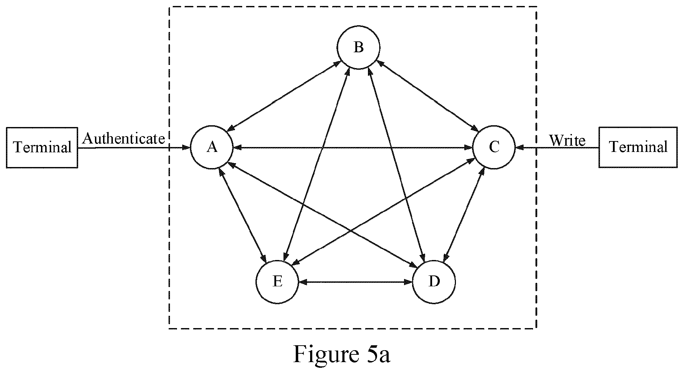

A blockchain network comprising 5 node devices as shown in Figure 5a is taken as an example. In an embodiment, when payment application clients in the terminal are registered in the blockchain network, public keys corresponding to the payment application clients, respectively, are stored in each node device, and the public keys enable the node devices to decrypt the device information carrying a signature and verify the signature. When a new payment application client is installed and can run in the terminal, the new payment application client may be registered in the blockchain network first, where a successful registration requires verification through consensus among node devices in the blockchain network. After the consensus reaches a positive conclusion, namely, after approval of other payment application clients corresponding to other node devices in the blockchain network, the new payment application client is successfully registered in the blockchain network. In such case, a public key corresponding to the new payment application client is added into a node device corresponding to the new payment application client, and the public key is broadcast to other node devices in the blockchain network, such that that the public keys of all node devices in the blockchain network are still consistent. After the new payment application client is successfully registered in the blockchain network, the device information of the image acquiring device for achieving the payment can be stored into the blockchain network, such that a user can perform the payment using the new payment application client.

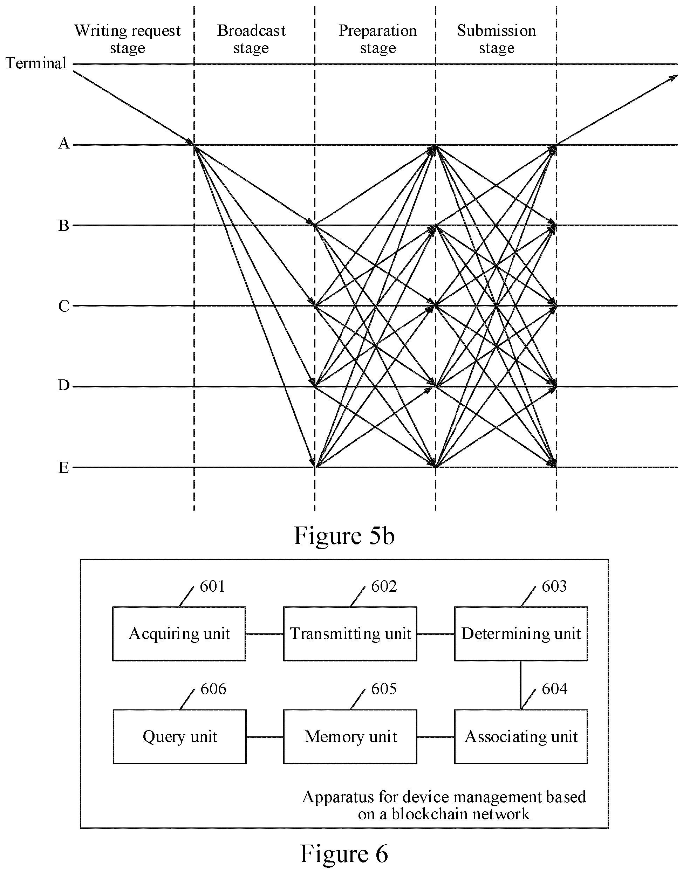

In an embodiment, a specific implementation of storing the device information of the image acquiring device into the blockchain network may comprises following steps. When detecting that a target payment application client (which may be regarded as the foregoing new payment application client) is installed and runs in a terminal, the terminal determines that the triggering operation for associating the target payment application client with the image acquiring device is detected. When the target payment application client is associated with the image acquiring device, the device information of the image acquiring device may be stored into the blockchain network. Specifically, when the triggering operation for associating the target payment application client with the image acquiring device is detected, the device information of the image acquiring device can be transmitted to the blockchain network such that the node devices in the blockchain network can perform authentication on the image acquiring device according to the device information. In response to determining that the image acquiring device passes authentication, the target payment application client is associated with the image acquiring device, and the device information of the image acquiring device is stored into the blockchain network. Figure 5b is a schematic flowchart of storing device information of an image acquiring device into a blockchain network according to an embodiment of the present disclosure. In the process as shown in Figure 5b, storing the device information of the image acquiring device into the blockchain network may comprises four stages, namely, a wring request stage, a broadcast stage, a preparation stage, and a submission stage.

A specific implementation for storing (also called wiring) device information of an image acquiring device into a blockchain network may comprises steps s11 to s16.

In step s11, after receiving signed device information of an image acquiring device, a target node device checks whether a signature in signed the device information is valid, and broadcasts the signed device information to other node devices in a case that the signature is valid.

In an embodiment, a terminal may acquire the device information of the image acquiring device when detecting triggering operation for associating a target payment application client with the image acquiring device. The device information may include an identifier of a manufacturer, an identifier of the device, a relevant parameter of the device, production time of the device, etc. The terminal may transmit the device information to the blockchain network after acquiring the device information. The terminal may transmit the device information to any node device in the blockchain network. As shown in Figure 5b, the terminal transmits the device information to node device A.

After the device information is sent to the node device A, it is required to determine whether the node device corresponds to the target payment application client. Each payment application client in the terminal has a corresponding node device in the blockchain network. For example, payment application client 1 included in the terminal corresponds to node device A, and payment application client 2 corresponds to node device B. Hence, after transmitting the device information to the node device, the terminal may acquire a network address of the node device, and check whether the acquired network address is consistent with a preset network address of a target node device. Alternatively, such node device may determine whether it is the target node device. In case of positive determination, such node device can perform the authentication on the device. In case of negative determination, such node device may return a network address of the target node device corresponding to the target payment application client to the terminal. The network address may be an Internet Protocol (IP) address in the aforementioned node identifier. After receiving the network address of the target node device, the terminal may redirect the device information to another node device, i.e., the target node device, according to the network address.

In a case that node device A is the target node device, node device A may perform the authentication on the image acquiring device according to the received device information. The device information is signed using a signature, and hence the target node device can perform the authentication based on validity of the signature. The image acquiring device is determined to pass the authentication in a case that the signature is valid, and is determined to not pass the authentication in a case that that the signature is invalid. After the target node device determines that the image acquiring device passes the authentication, the process proceeds to the broadcast stage. The signed device information is transmitted to other node devices, i.e., node device B, node device C, node device D, and node device E in the blockchain network. The other node devices can perform the authentication on the image acquiring device according to the received device information.

In step s12, after receiving the signed device information, node device B, node device C, node device D, and node device E determine whether the signature in the signed device information is valid.

In an embodiment, node device B, node device C, node device D, and node device check whether the signature carried in device information is valid. When the received device information comprises multiple pieces, checking validity of the signature comprises checking whether a sequence of the pieces of the device information and a sequence of operations on the device information are correct. The signature is determined to be valid in a case that the sequences are correct, and is determined to be invalid in a case that any sequence is incorrect.

In step s13, each node device stores a respective result of authentication performed by itself and transmit the respective result to other node devices, after node device B, node device C, node device D, and node device E perform the authentication.

In an embodiment, the respective result may indicate that the corresponding node device is a node device reporting normality or that the corresponding node device is a node device reporting abnormality. Specifically, whether the corresponding node device reporting normality or abnormality is determined according to whether the signature is checked by such node device determined to be valid. For example, node device B is determined to report normality in a case that the signature checked by node device B is determined to be valid, and determined to report abnormality in a case that the signature checked by node device B is determined to be invalid.

In step s14, each node counts the node devices reporting normality.

In an embodiment as shown in Figure 5b, after determining respective abnormality, node device B, node device C, node device D, and node device E may transmit the result concerning the respective abnormality to other node devices in the blockchain network, and hence each node device is capable to count the node devices reporting normality to obtain the foregoing second quantity. In a case that the second quantity exceeds a threshold, which may be 2f+1, i.e., there are more than 2f+1 node devices reporting normality, the process may proceed to the subsequent submission stage. f represents a quantity of node devices reporting abnormality, and hence there is 3f+1 = n, where n is a quantity of the node devices in the blockchain network. That is, f is the quantity of the node devices reporting abnormality, while 2f+1 is the quantity of the node devices reporting normality. For example, assuming that there are 5 node devices in total, the process may proceed to subsequent steps in a case that there are more than 3 node devices reporting normality, i.e., there is at most 1 node device reporting abnormality.

In step s15, each node device transmits respective authentication result to other node devices, and counts a quantity of positive authentication results.

In an embodiment as shown in Figure 5b, after each node device in a blockchain network count the node devices reporting normality, it may transmit an authentication result, which is performed by itself on the image acquiring device, to other node devices. The authentication result may indicated that the corresponding node device determine that the image acquiring device passes the authentication or does not pass the authentication. Specifically, when a quantity obtained by a node device counting the node devices reporting normality does not exceed the threshold, such node device transmits the authentication result indicating that the image acquiring device is determined to not pass the authentication to other node devices. When a quantity obtained by a node device counting the node devices reporting normality exceeds the threshold, such node device transmits the authentication result indicating that the image acquiring device is determined to pass the authentication to other node devices. After receiving the authentication results, each node device may count the authentication results indicating that the image acquiring device is determined to pass the authentication to obtain the foregoing first quantity. In a case that the first quantity also exceeds 2f+1, or the first quantity is equal to the second quantity, it is determined that the image acquiring device passes the authentication. Accordingly, the device information of the image acquiring device can be stored into the blockchain network.

In step s16, the terminal receives a quantity of the positive authentication results which are returned by the nodes.

In an embodiment, each node device may transmit the respective authentication result to the terminal, and the terminal may determine whether the image acquiring device passes the authentication according to the authentication results. After the image acquiring device is determined to pass the authentication, the target payment application client can be associated with the image acquiring device, and the device information of the image acquiring device can be stored into the blockchain network.

Writing the device information of the image acquiring device is not a high-frequency operation. The device information of an image acquiring device is not required to be written into the blockchain network until the image acquiring device has been produced and then tested on a corresponding factory line. Accordingly, failures of a certain node device in the blockchain network has an influence merely on association between a payment application client corresponding to such node device and the image acquiring device, while having no influence on association between another payment application client and the image acquiring device, because the failure of such node device would not affect the usage of another node device.

In embodiments of the present disclosure, the terminal can acquire the device information of the image acquiring device in response to the triggering operation for associating the image acquiring device with the target application client in the at least two application clients, and then transmit the device information to the blockchain network, so that the node devices in the blockchain network perform authentication on the image acquiring device according to the device information. The terminal counts the first quantity of the authentication results which indicate that the corresponding node devices determine the image acquiring device to pass the authentication and the second quantity of the node devices reporting normality in the blockchain network, and determines whether the image acquiring device passes the authentication according to the first quantity and the second quantity. When determining that the image acquiring device passes the authentication, the target application client is associated with the image acquiring device. The above solution can support operation of different application clients in the terminal using one image acquiring device, which simplifies deployment of the image acquiring devices and improves convenience.

On a basis of the above description, an apparatus for device management based on a blockchain network is further provided according to an embodiment of the present disclosure. The apparatus may be disposed in the foregoing terminal or may be a computer program (including a program code) in the foregoing terminal. At least two application clients run in the terminal, and the terminal has a corresponding feature acquiring device. The apparatus for device management may be configured to execute the method for device management based on the blockchain network as shown in Figure 2 or Figure 4. Reference is made to Figure 6, where the apparatus comprises an acquiring unit 601, a transmitting unit 602, a determining unit 603 and an associating unit 604.

The acquiring unit 601 is configured to acquire device information of the feature acquiring device in response to a triggering operation for associating a feature acquiring device with a target application client in the at least two application clients.

The transmitting unit 602 is configured to transmit the device information to the blockchain network, so as to enable node devices in the blockchain network to perform authentication on the feature acquiring device according to the device information.

The determining unit 603 is configured to acquire one or more authentication results, each returned by a corresponding one of the node devices, from the blockchain network.

The associating unit 604 configured to associate the target application client with the feature acquiring device in response to the determining unit 603 determining that the feature acquiring device passes the authentication according to the authentication results.

In an embodiment, the target application client is an arbitrary one of the at least two application clients, and each node device provides a service for a corresponding one of the at least two application clients. After each application client has been associated with the feature acquiring device, the acquiring unit 601 is further configured to: acquire feature information from the feature acquiring device and transmit the feature information to one of the node devices in the blockchain network, so as to enable such node device to recognize the feature information.

In an embodiment, the transmitting unit 602 is further configured to, transmit the device information to a node device among the node devices in the blockchain network and acquire a network address of the node device, and in response to determining that the acquired network address is consistent with a preset network address, instruct the node device to: perform the authentication on the feature acquiring device according to the device information, and then transmit the device information to other node devices in the blockchain network.

In an embodiment, a transmitting unit 602 is further configured to, in response to determining that the acquired network address is inconsistent with a preset network address, transmit the device information to a target node device in a blockchain network, where the target node device is indicated by the preset network address, and instruct the target node device to: perform the authentication on the feature acquiring device according to the device information, and then transmit the device information to other node devices in the blockchain network.

In an embodiment, each authentication result indicates that the corresponding node device determines that the feature acquiring device passes the authentication, or that the corresponding node device determines that the feature acquiring device does not pass the authentication. The determining unit 603 is further configured to: determine a first quantity of positive authentication results and a second quantity of node devices reporting normality in the blockchain network, where each positive authentication result is the authentication results indicating that the corresponding node device determines that the feature acquiring device passes the authentication; and determine that the feature acquiring device passes the authentication according to the first quantity and the second quantity.

In an embodiment, the determining unit 603 is further configured to: determine that a feature acquiring device passes the authentication in a case that the first quantity is equal to the second quantity.

In an embodiment, a determining unit 603 is further configured to: acquire verification feedbacks from a target node device, where the verification feedbacks are results determined through the node devices performing verification on the device information of the feature acquiring device in a case that the target node device transmits the device information to the other node devices; and determine the second quantity of node devices reporting normality in the blockchain network according to the verification feedbacks.

In an embodiment, a transmitting unit 602 is further configured to: acquire the device information and a device private key of the feature acquiring device from the feature acquiring device; sign the device information using the device private key to obtain the device information carrying a signature; and transmit the device information carrying the signature to the blockchain network.

In an embodiment, an apparatus further comprises a storing unit 605. The storing unit 605 is configured to store the device information of the feature acquiring device in the blockchain network in response to determining that the feature acquiring device passes the authentication.

In an embodiment, there are multiple pieces of the device information. The storing unit 605 is further configured to: acquire a storage location of each piece of the device information in a blockchain network; record the storage locations sequentially to obtain an index for fetching the device information of the feature acquiring device; and store the index.

In an embodiment, an apparatus further comprises a query unit 606. The query unit 606 is configured to acquire the index of the device information in response to a request for fetching the device information; determine the storage locations of all pieces of the device information in the blockchain network according to the index; and acquire the device information of the feature acquiring device from the blockchain network according to the storage locations, in response to a signature in the request being determined to match a signature in the device information.

In embodiments of the present disclosure, the acquiring unit 601 acquires the device information of the feature acquiring device in response to the triggering operation for associating the feature acquiring device with the target application client in the at least two application clients; the transmitting unit 602 transmits the device information to the blockchain network, so that the node devices in the blockchain network perform authentication on the feature acquiring device according to the device information; the determining unit 603 acquires the one or more authentication results, each returned by the corresponding node device, from the blockchain network; and the associating unit 604 associates the target application client with the feature acquiring device, when the determining unit 603 determines that the feature acquiring device passes the authentication according to the one or more authentication results. The above solution can support operation of different application clients in the terminal using one feature acquiring device, which simplifies deployment of the feature acquiring devices and improves convenience.

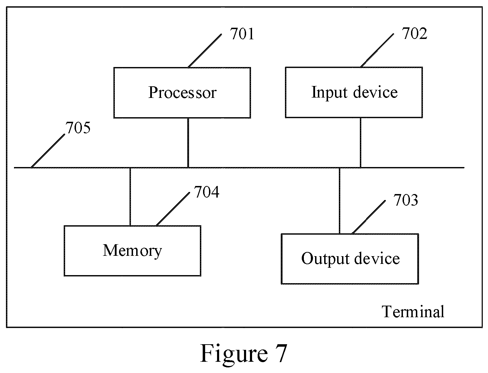

Reference is made to Figure 7, which is a schematic structural block diagram of a terminal according to an embodiment of the present disclosure. The terminal may be a terminal in the foregoing embodiments. The terminal as shown in Figure 7 may comprises one or more processors 701, one or more input devices 702, one or more output devices 703, and a memory 704. The processor 701, the input device(s) 702, the output device(s) 703, and the memory 704 are connected v9a a bus 705. The memory 704 is configured to store a computer program comprising program instructions. The processor 701 is configured to execute the program instructions stored in the memory 704.

The memory 704 may include a volatile memory such as a random access memory (RAM), or a non-volatile memory such as a flash memory, a solid-state drive (SSD). Alternative, the memory 704 may include a combination of the foregoing types of memories.

The processor 701 may be a central processing unit (CPU). The processor 701 may further include a hardware chip which may be an application-specific integrated circuit (ASIC), a programmable logic device (PLD), or the like. The PLD may be a field programmable gate array (FPGA), generic array logic (GAL), or the like. The processor 701 may alternatively be a combination of the foregoing structures.

Herein the memory 704 is configured to store a computer program comprising program instructions. The processor 701 is configured to execute the program instructions stored in the memory 704 to implement the steps of the corresponding method, for example, as shown in Figure 2 or Figure 4.

In an embodiment, a processor 701 is configured to invoke the program instructions to perform: acquiring device information of the feature acquiring device in response to a triggering operation for associating the feature acquiring device with a target application client in the at least two application clients; transmitting the device information to the blockchain network to enable node devices in the blockchain network to perform authentication on the feature acquiring device according to the device information; acquiring one or more authentication results, each returned by a corresponding one of the node devices, from the blockchain network; and associating the target application client with the feature acquiring device in response to determining that the feature acquiring device passes the authentication according to the one or more authentication results.

In an embodiment, the target application client is an arbitrary one of the at least two application clients, and each node device provides a service for a corresponding one of the at least two application clients. After each application client has been associated with the feature acquiring device, the processor 701 is configured to invoke the program instructions to perform: acquiring feature information from the feature acquiring device and transmitting the feature information to one of the node devices in the blockchain network, so as to enable such node device to recognize the feature information.

In an embodiment, the processor 701 is configured to invoke the program instructions to perform: transmitting the device information to a node device among the node devices in the blockchain network and acquiring a network address of the node device, and in response to determining that the acquired network address is consistent with a preset network address, instructing the node device to: perform the authentication on the feature acquiring device according to the device information, and then transmit the device information to other node devices in the blockchain network.

In an embodiment, a processor 701 is configured to invoke the program instructions to perform: in response to determining that the acquired network address is inconsistent with a preset network address, transmitting the device information to a target node device in a blockchain network, where the target node device is indicated by the preset network address, and instructing the target node device to: perform the authentication on the feature acquiring device according to the device information, and then transmit the device information to other node devices in the blockchain network.

In an embodiment, each authentication result indicates that the corresponding node device determines that the feature acquiring device passes the authentication, or that the corresponding node device determines that the feature acquiring device does not pass the authentication. The processor 701 is configured to invoke the program instruction to perform: determining a first quantity of positive authentication results and a second quantity of node devices reporting normality in the blockchain network, where each positive authentication result is the authentication results indicating that the corresponding node device determines that the feature acquiring device passes the authentication; and determining that the feature acquiring device passes the authentication according to the first quantity and the second quantity.

In an embodiment, the processor 701 is configured to invoke the program instructions to perform: determining that a feature acquiring device passes the authentication in a case that the first quantity is equal to the second quantity.

In an embodiment, the processor 701 is configured to invoke the program instructions to perform: acquiring verification feedbacks from a target node device, where the verification feedbacks are results determined through the node devices performing verification on the device information of the feature acquiring device in a case that the target node device transmits the device information to the other node devices; and determining the second quantity of node devices reporting normality in the blockchain network according to the verification feedbacks.

In an embodiment, the processor 701 is configured to invoke the program instructions to perform: acquiring the device information and a device private key of the feature acquiring device from the feature acquiring device; signing the device information using the device private key to obtain the device information carrying a signature; and transmitting the device information carrying the signature to the blockchain network.

In an embodiment, the processor 701 is configured to invoke the program instructions to perform: storing the device information of the feature acquiring device in the blockchain network in response to determining that the feature acquiring device passes the authentication.

In an embodiment, the processor 701 is configured to invoke the program instructions to perform: acquiring a storage location of each piece of the device information in a blockchain network; recording the storage locations sequentially to obtain an index for fetching the device information of the feature acquiring device; and storing the index.

In an embodiment, the processor 701 is configured to invoke the program instructions to perform: acquiring the index of the device information in response to a request for fetching the device information; determining the storage locations of all pieces of the device information in the blockchain network according to the index; and acquiring the device information of the feature acquiring device from the blockchain network according to the storage locations, in response to a signature in the request being determined to match a signature in the device information.

A computer program product or a computer program is further provided according to an embodiment of the present disclosure. The computer program product or the computer program comprises computer instructions, and the computer instructions are stored in a computer-readable storage medium. A processor of a terminal reads the computer instructions from the computer-readable storage medium and executes the computer instructions to configure the terminal to perform the method embodiment, for example, as shown in Figure 2 and Figure 4. The computer-readable storage medium may include a magnetic disc, an optical disc, a read-only memory (ROM), a random access memory (RAM), or the like.

Hereinabove merely some embodiments of the present disclosure are described, which is not intended for limiting the scope of the present disclosure. Those skilled in the art can appreciated and implement all or some processes of the foregoing embodiments, and make equivalent modifications according to the claims of the present disclosure. These modifications shall fall within the scope of the present disclosure.

## Claims

1. A method for device management based on a blockchain network, wherein the method is executable by a terminal, on which at least two application clients run and which corresponds to a feature acquiring device, and comprises:

   for each of the at least two application clients,
   acquiring (S201) device information of the feature acquiring device in response to a triggering operation for associating the feature acquiring device with said application client;
   transmitting (S202) the device information to the blockchain network to enable node devices in the blockchain network to obtain one or more authentication results by performing authentication on the feature acquiring device according to the device information;
   acquiring (S203) the one or more authentication results, each returned by a corresponding one of the node devices, from the blockchain network; and
associating (S204) said application client with the feature acquiring device in response to determining that the feature acquiring device passes the authentication according to the one or more authentication results; wherein each of the node devices is configured to provide a service for a respective application client among the at least two application clients; and
wherein for each of the at least two application clients, in response to being associated with the feature acquiring device and invoking the feature acquiring device, said application client is provided with an access to feature information, which is received from the feature acquiring device, to perform identity authentication on a user in the terminal.

2. The method according to claim 1, wherein
after each of the at least two application clients is associated with the feature acquiring device, the method further comprises:

   acquiring feature information from the feature acquiring device; and
   transmitting the feature information to one of the node devices in the blockchain network to enable such node device to recognize the feature information.

3. The method according to claim 1, wherein transmitting (S202) the device information to the blockchain network to enable the node devices in the blockchain network to perform the authentication on the feature acquiring device according to the device information comprises:

   transmitting the device information to a node device among the node devices in the blockchain network and acquiring a network address of the node device, and
   in response to determining that the acquired network address is consistent with a preset network address, instructing the node device to perform the authentication on the feature acquiring device according to the device information and then transmit the device information to other node devices in the blockchain network.

4. The method according to claim 3, further comprising: in response to determining that the acquired network address is inconsistent with a preset network address,

   transmitting the device information to a target node device in a blockchain network, wherein the target node device is indicated by the preset network address, and
   instructing the target node device to perform the authentication on the feature acquiring device according to the device information and then transmit the device information to other node devices in the blockchain network.

5. The method according to claim 1, wherein:

   each authentication result indicates that the corresponding node device determines that the feature acquiring device passes the authentication, or that the corresponding node device determines that the feature acquiring device does not pass the authentication; and
   determining that the feature acquiring device passes the authentication according to the one or more authentication results comprises:

      determining a first quantity of positive authentication results and a second quantity of node devices reporting normality in the blockchain network, where each positive authentication result is the authentication results indicating that the corresponding node device determines that the feature acquiring device passes the authentication; and
      determining that the feature acquiring device passes the authentication according to the first quantity and the second quantity.

6. The method according to claim 5, wherein determining that the feature acquiring device passes the authentication according to the first quantity and the second quantity comprises:
determining that a feature acquiring device passes the authentication in response to the first quantity being equal to the second quantity.

7. The method according to claim 6, wherein the determining the second quantity of the node devices reporting normality in the blockchain network comprises:

acquiring verification feedbacks from a target node device, wherein the verification feedbacks are results determined through the node devices performing verification on the device information of the feature acquiring device in a case that the target node device transmits the device information to the other node devices; and determining the second quantity of the node devices reporting normality according to the verification feedbacks.

8. The method according to claim 1, wherein transmitting (S202) the device information to the blockchain network comprises:

acquiring the device information and a device private key of the feature acquiring device from the feature acquiring device;
signing the device information using the device private key to obtain the device information carrying a signature; and
transmitting the device information carrying the signature to the blockchain network.

9. The method according to claim 1, further comprising:
storing the device information of the feature acquiring device in the blockchain network in response to determining that the feature acquiring device passes the authentication.

10. The method according to claim 9, wherein there are pieces of the device information, and after storing the device information of the feature acquiring device in the blockchain network, the method further comprises:

acquiring a storage location of each piece of the device information in a blockchain network;
recording the storage locations sequentially to obtain an index for fetching the device information of the feature acquiring device; and
storing the index.

11. The method according to claim 10, further comprising:

acquiring the index of the device information in response to a request for fetching the device information;
determining the storage locations of all pieces of the device information in the blockchain network according to the index; and
acquiring the device information of the feature acquiring device from the blockchain network according to the storage locations, in response to a signature in the request being determined to match a signature in the device information.

12. A terminal device, comprising:
a processor, an input device, an output device, and a memory which are connected to each other, wherein:
the memory is configured to store a computer program comprising program instructions, and the processor is configured to invoke the program instructions to perform the method according to any one of claims 1 to 11.

13. A computer-readable storage medium, storing a computer program comprising program instructions, wherein:
the program instructions when executed by a processor configure the processor to perform the method according to any one of claims 1 to 11.

14. A computer program product, wherein the computer program product when executed is configured to perform the method according to any one of claims 1 to 11.

**Patentansprüche**

1. Verfahren für eine Vorrichtungsverwaltung auf Basis eines Blockkettennetzwerks, wobei das Verfahren von einem Endgerät ausführbar ist, auf dem mindestens zwei Anwendungsclients laufen und das einer Merkmalserfassungsvorrichtung entspricht, das Folgendes umfasst:

für jeden der mindestens zwei Anwendungsclients,
Erfassen (S201) von Vorrichtungsinformationen der Merkmalserfassungsvorrichtung in Reaktion auf eine Auslöseoperation zum Verknüpfen der Merkmalserfassungsvorrichtung mit dem Anwendungsclient;
Übertragen (S202) der Vorrichtungsinformationen zum Blockkettennetzwerk, um es Knotenvorrichtungen im Blockkettennetzwerk zu ermöglichen, durch Durchführen einer Authentifizierung an der Merkmalserfassungsvorrichtung gemäß den Vorrichtungsinformationen ein oder mehrere Authentifizierungsergebnisse zu erhalten; Erfassen (S203) des einen oder der mehreren Authentifizierungergebnisse, von denen jedes durch eine entsprechende der Knotenvorrichtungen zurückgegeben wird, vom Blockkettennetzwerk; und

Verknüpfen (S204) des Anwendungsclients mit der Merkmalserfassungsvorrichtung in Reaktion auf das Bestimmen, dass die Merkmalserfassungsvorrichtung die Authentifizierung gemäß dem einen oder den mehreren Authentifizierungergebnissen bestanden hat;

wobei jede der Knotenvorrichtungen dazu ausgelegt ist, einen Dienst für einen jeweiligen Anwendungsclient der mindestens zwei Anwendungsclients bereitzustellen; und

wobei in Reaktion darauf, dass er mit der Merkmalserfassungsvorrichtung verknüpft ist und die Merkmalserfassungsvorrichtung aufruft, der Anwendungsclient für jeden der mindestens zwei Anwendungsclients mit einem Zugang zu Merkmalsinformationen versehen ist, die von der Merkmalserfassungsvorrichtung empfangen werden, um an einem Benutzer im Endgerät eine Identitätsauthentifizierung durchzuführen.

2. Verfahren nach Anspruch 1, wobei
das Verfahren, nachdem jeder der mindestens zwei Anwendungsclients mit der Merkmalserfassungsvorrichtung verknüpft wurde, ferner Folgendes umfasst:

Erfassen von Merkmalsinformationen von der Merkmalserfassungsvorrichtung; und
Übertragen der Merkmalsinformationen zu einer der Knotenvorrichtung im Blockkettennetzwerk, um es einer solchen Knotenvorrichtung zu ermöglichen, die Merkmalsinformationen zu erkennen.

3. Verfahren nach Anspruch 1, wobei das Übertragen (S202) der Vorrichtungsinformationen zum Blockkettennetzwerk, um es den Knotenvorrichtungen im Blockkettennetzwerk zu ermöglichen, die Authentifizierung an der Merkmalserfassungsvorrichtung gemäß den Vorrichtungsinformationen durchzuführen, Folgendes umfasst:

Übertragen der Vorrichtungsinformationen zu einer Knotenvorrichtung der Knotenvorrichtungen im Blockkettennetzwerk und Erfassen einer Netzwerkadresse der Knotenvorrichtung, und
in Reaktion auf das Bestimmen, dass die erfasste Netzwerkadresse mit einer voreingestellten Netzwerkadresse konsistent ist, Anweisen der Knotenvorrichtung, die Authentifizierung an der Merkmalserfassungsvorrichtung gemäß den Vorrichtungsinformationen durchzuführen und dann die Vorrichtungsinformationen zu weiteren Knotenvorrichtungen im Blockkettennetzwerk zu übertragen.

4. Verfahren nach Anspruch 3, das ferner Folgendes umfasst: in Reaktion auf das Bestimmen, dass die erfasste Netzwerkadresse mit der voreingestellten Netzwerkadresse nicht konsistent ist,

Übertragen der Vorrichtungsinformationen zu einer Zielknotenvorrichtung in einem Blockkettennetzwerk, wobei die Zielknotenvorrichtung von der voreingestellten Netzwerkadresse angezeigt wird, und
Anweisen der Zielknotenvorrichtung, die Authentifizierung an der Merkmalserfassungsvorrichtung gemäß den Vorrichtungsinformationen durchzuführen und dann die Vorrichtungsinformationen zu anderen Knotenvorrichtungen im Blockkettennetzwerk zu übertragen.

5. Verfahren nach Anspruch 1, wobei:

jedes Authentifizierungsergebnis anzeigt, dass die entsprechende Knotenvorrichtung bestimmt, dass die Erfassungsvorrichtung die Authentifizierung bestanden hat, oder dass die entsprechende Knotenvorrichtung bestimmt, dass die Merkmalserfassungsvorrichtung die Authentifizierung nicht bestanden hat; und
das Bestimmen, dass die Merkmalserfassungsvorrichtung die Authentifizierung gemäß dem einen oder den mehreren Authentifizierungsergebnissen bestanden hat, Folgendes umfasst:

Bestimmen einer ersten Menge von positiven Authentifizierungsergebnissen und einer zweiten Menge von Knotenvorrichtungen, die eine Normalität im Blockkettennetzwerk melden, wo jedes positive Authentifizierungsergebnis die Authentifizierungsergebnisse ist, die anzeigen, dass die entsprechende Knotenvorrichtung bestimmt, dass die Merkmalserfassungsvorrichtung die Authentifizierung bestanden hat; und
Bestimmen, dass die Merkmalserfassungsvorrichtung die Authentifizierung gemäß der ersten Menge und der zweiten Menge bestanden hat.

6. Verfahren nach Anspruch 5, wobei das Bestimmen, dass die Merkmalserfassungsvorrichtung die Authentifizierung gemäß der ersten Menge und der zweiten Menge bestanden hat, Folgendes umfasst:
Bestimmen, dass die Merkmalserfassungsvorrichtung die Authentifizierung bestanden hat, in Reaktion darauf, dass die erste Menge gleich der zweiten Menge ist.

7. Verfahren nach Anspruch 6, wobei das Bestimmen der zweiten Menge der Knotenvorrichtungen, die eine Normalität im Blockkettennetzwerk melden, Folgendes umfasst:

   Erfassen von Verifizierungsfeedbacks von einer Zielknotenvorrichtung, wobei die Verifizierungsfeedbacks Ergebnisse sind, die durch das Durchführen einer Verifizierung an den Vorrichtungsinformationen der Merkmalserfassungsvorrichtung in einem Fall, in dem die Zielknotenvorrichtung die Vorrichtungsinformationen zu anderen Knotenvorrichtungen überträgt, durch die Knotenvorrichtungen bestimmt werden; und
   Bestimmen der zweiten Menge der Knotenvorrichtungen, die eine Normalität gemäß den Verifizierungsfeedbacks melden.

8. Verfahren nach Anspruch 1, wobei das Übertragen (S202) der Vorrichtungsinformationen zum Blockkettennetzwerk Folgendes umfasst:

   Erfassen der Vorrichtungsinformationen und eines privaten Vorrichtungsschlüssels der Merkmalserfassungsvorrichtung von der Merkmalserfassungsvorrichtung;
   Signieren der Vorrichtungsinformationen unter Verwendung des privaten Vorrichtungsschlüssels, um die Vorrichtungsinformationen, die eine Signatur enthalten, zu erhalten; und
   Übertragen der Vorrichtungsinformationen, die die Signatur enthalten, zum Blockkettennetzwerk.

9. Verfahren nach Anspruch 1, das ferner Folgendes umfasst:
   Speichern der Vorrichtungsinformationen der Merkmalserfassungsvorrichtung im Blockkettennetzwerk in Reaktion auf das Bestimmen, dass die Merkmalserfassungsvorrichtung die Authentifizierung bestanden hat.

10. Verfahren nach Anspruch 9, wobei es Teile der Vorrichtungsinformationen gibt und das Verfahren nach dem Speichern der Vorrichtungsinformationen der Merkmalserfassungsvorrichtung im Blockkettennetzwerk ferner Folgendes umfasst:

    Erfassen eines Speicherorts von jedem Teil der Vorrichtungsinformationen in einem Blockkettennetzwerk;
    sequenzielles Aufzeichnen der Speicherorte, um einen Index zum Abholen der Vorrichtungsinformationen der Merkmalserfassungsvorrichtung zu erhalten; und
    Speichern des Index.

11. Verfahren nach Anspruch 10, das ferner Folgendes umfasst:

    Erfassen des Index der Vorrichtungsinformationen in Reaktion auf eine Anforderung zum Abholen der Vorrichtungsinformationen;
    Bestimmen der Speicherorte und von allen Teilen der Vorrichtungsinformationen im Blockkettennetzwerk gemäß dem Index; und
    Erfassen der Vorrichtungsinformationen der Merkmalserfassungsvorrichtung aus dem Blockkettennetzwerk gemäß den Speicherorten in Reaktion darauf, dass bestimmt wird, dass eine Signatur in der Anforderung mit einer Signatur in den Vorrichtungsinformationen übereinstimmt.

12. Endgerätevorrichtung, die Folgendes umfasst:
    einen Prozessor, eine Eingabevorrichtung, eine Ausgabevorrichtung und einen Speicher, die miteinander verbunden sind, wobei:
    der Speicher dazu ausgelegt ist, ein Computerprogramm zu speichern, das Programmanweisungen umfasst, und der Prozessor dazu ausgelegt ist, die Programmanweisungen aufzurufen, um das Verfahren nach einem der Ansprüche 1 bis 11 durchzuführen.

13. Computerlesbares Speichermedium, auf dem ein Computerprogramm gespeichert ist, das Programmanweisungen umfasst, wobei:
    die Programmanweisungen, wenn sie von einem Prozessor ausgeführt werden, den Prozessor dazu auslegen, das Verfahren nach einem der Ansprüche 1 bis 11 durchzuführen.

**14.** Computerprogrammprodukt, wobei das Computerprogrammprodukt, wenn es ausgeführt wird, dazu ausgelegt ist, das Verfahren nach einem der Ansprüche 1 bis 11 durchzuführen.

**Revendications**

**1.** Procédé de gestion de dispositif sur la base d'un réseau de chaine de blocs, dans lequel le procédé est exécutable par un terminal sur lequel s'exécutent au moins deux clients d'application et qui correspond à un dispositif d'acquisition de caractéristiques, et comprend les étapes suivantes :

pour chacun des au moins deux clients d'application,
acquérir (S201) des informations de dispositif du dispositif d'acquisition de caractéristiques en réponse à une opération de déclenchement pour associer le dispositif d'acquisition de caractéristiques audit client d'application ;
transmettre (S202) les informations de dispositif au réseau de chaine de blocs pour permettre à des dispositifs nœuds dans le réseau de chaine de blocs d'obtenir un ou plusieurs résultats d'authentification en effectuant une authentification sur le dispositif d'acquisition de caractéristiques selon les informations de dispositif ;
acquérir (S203) les un ou plusieurs résultats d'authentification, chacun renvoyé par un dispositif nœud correspondant des dispositifs nœuds, à partir du réseau de chaine de blocs ; et
associer (S204) ledit client d'application au dispositif d'acquisition de caractéristiques en réponse à la détermination de la réussite de l'authentification par le dispositif d'acquisition de caractéristiques selon les un ou plusieurs résultats d'authentification ;
dans lequel chacun des dispositifs nœuds est configuré pour fournir un service à un client d'application respectif parmi les au moins deux clients d'application ; et
dans lequel, pour chacun des au moins deux clients d'application, en réponse à leur association au dispositif d'acquisition de caractéristiques et à l'invocation du dispositif d'acquisition de caractéristiques, ledit client d'application est pourvu d'un accès à des informations de caractéristiques qui sont reçues du dispositif d'acquisition de caractéristiques pour effectuer une authentification d'identité sur un utilisateur dans le terminal.

**2.** Procédé selon la revendication 1, dans lequel
après l'association de chacun des au moins deux clients d'application au dispositif d'acquisition de caractéristiques, le procédé comprend en outre les étapes suivantes :

acquérir des informations de caractéristiques à partir du dispositif d'acquisition de caractéristiques ; et
transmettre les informations de caractéristiques à un des dispositifs nœuds dans le réseau de chaine de blocs pour permettre à ce dispositif nœud de reconnaître les informations de caractéristiques.

**3.** Procédé selon la revendication 1, dans lequel la transmission (S202) des informations de dispositif au réseau de chaine de blocs pour permettre aux dispositifs nœuds dans le réseau de chaine de blocs d'effectuer l'authentification sur le dispositif d'acquisition de caractéristiques selon les informations de dispositif comprend ce qui suit :

transmettre les informations de dispositif à un dispositif nœud parmi les dispositifs nœuds dans le réseau de chaine de blocs, et l'acquisition d'une adresse réseau du dispositif nœud, et
en réponse à la détermination de la compatibilité de l'adresse réseau acquise avec une adresse réseau prédéfinie, ordonner au dispositif nœud d'effectuer l'authentification sur le dispositif d'acquisition de caractéristiques selon les informations de dispositif, puis de transmettre les informations de dispositif à d'autres dispositifs nœuds dans le réseau de chaine de blocs.

**4.** Procédé selon la revendication 3, comprenant en outre les étapes suivantes : en réponse à la détermination d'une incompatibilité de l'adresse réseau acquise avec une adresse réseau prédéfinie,

transmettre les informations de dispositif à un dispositif nœud cible dans un réseau de chaine de blocs, le dispositif nœud cible étant indiqué par l'adresse réseau prédéfinie, et
ordonner au dispositif nœud cible d'effectuer l'authentification sur le dispositif d'acquisition de caractéristiques selon les informations de dispositif, puis de transmettre les informations de dispositif à d'autres dispositifs nœuds dans le réseau de chaine de blocs.

**5.** Procédé selon la revendication 1, dans lequel :

chaque résultat d'authentification indique que le dispositif nœud correspondant détermine la réussite de l'authentification par le dispositif d'acquisition de caractéristiques, ou indique que le dispositif nœud correspondant détermine la non réussite de l'authentification par le dispositif d'acquisition de caractéristiques ; et la détermination de la réussite de l'authentification par le dispositif d'acquisition de caractéristiques selon les un ou plusieurs résultats d'authentification comprend :

la détermination d'une première quantité de résultats d'authentification positifs et d'une deuxième quantité de dispositifs nœuds signalant la normalité du réseau de chaine de blocs, où tous les résultats d'authentification positifs sont les résultats d'authentification indiquant que le dispositif nœud correspondant détermine la réussite de l'authentification par le dispositif d'acquisition de caractéristiques ; et la détermination de la réussite de l'authentification par le dispositif d'acquisition de caractéristiques selon la première quantité et la deuxième quantité.

6. Procédé selon la revendication 5, dans lequel la détermination de la réussite de l'authentification par le dispositif d'acquisition de caractéristiques selon la première quantité et la deuxième quantité comprend : la détermination de la réussite de l'authentification par un dispositif d'acquisition de caractéristiques lorsque la première quantité est égale à la deuxième quantité.

7. Procédé selon la revendication 6, dans lequel la détermination de la deuxième quantité de dispositifs nœuds signalant la normalité du réseau de chaine de blocs comprend :

l'acquisition de rétroactions de vérification d'un dispositif nœud cible, dans lequel les rétroactions de vérification sont des résultats déterminés par les dispositifs nœuds effectuant une vérification sur les informations de dispositif du dispositif d'acquisition de caractéristiques dans le cas où le dispositif nœud cible transmet les informations de dispositif aux autres dispositifs nœuds ; et la détermination de la deuxième quantité de dispositifs nœuds signalant la normalité selon les rétroactions de vérification.

8. Procédé selon la revendication 1, dans lequel la transmission (S202) des informations de dispositif au réseau de chaine de blocs comprend :

l'acquisition des informations de dispositif et d'une clé privée de dispositif du dispositif d'acquisition de caractéristiques à partir du dispositif d'acquisition de caractéristiques ; la signature des informations de dispositif à l'aide de la clé privée de dispositif pour obtenir les informations de dispositif portant une signature ; et la transmission des informations de dispositif portant la signature au réseau de chaine de blocs.

9. Procédé selon la revendication 1, comprenant en outre l'étape suivante : stocker les informations de dispositif du dispositif d'acquisition de caractéristiques dans le réseau de chaine de blocs en réponse à la détermination de la réussite de l'authentification par le dispositif d'acquisition de caractéristiques.

10. Procédé selon la revendication 9, dans lequel il existe des informations de dispositif, et après avoir stocké les informations de dispositif du dispositif d'acquisition de caractéristiques dans le réseau de chaine de blocs, le procédé comprend en outre les étapes suivantes :

acquérir un emplacement de stockage de chaque information de dispositif dans un réseau de chaine de blocs ; enregistrer les emplacements de stockage séquentiellement pour obtenir un index pour récupérer les informations de dispositif du dispositif d'acquisition de caractéristiques ; et stocker l'index.

11. Procédé selon la revendication 10, comprenant en outre les étapes suivantes :

acquérir l'index des informations de dispositif en réponse à une demande récupération des informations de dispositif ; déterminer les emplacements de stockage de toutes les informations de dispositif dans le réseau de chaine de blocs selon l'index ; et acquérir les informations de dispositif du dispositif d'acquisition de caractéristiques à partir du réseau de chaine de blocs selon les emplacements de stockage en réponse à la détermination de la concordance d'une signature dans la demande avec une signature dans les informations de dispositif.

**12.** Dispositif terminal, comprenant :
un processeur, un dispositif d'entrée, un dispositif de sortie et une mémoire qui sont connectés les uns aux autres, dans lequel :
la mémoire est configurée pour stocker un programme informatique comprenant des instructions de programme, et le processeur est configuré pour invoquer les instructions de programme pour réaliser le procédé selon l'une des revendications 1 à 11.

**13.** Support de stockage lisible par ordinateur stockant un programme informatique comprenant des instructions de programme, dans lequel :
les instructions de programme, lorsqu'elles sont exécutées par un processeur, configurent le processeur pour réaliser le procédé selon l'une des revendications 1 à 11.

**14.** Produit de programme informatique, dans lequel le produit de programme informatique, lorsqu'il est exécuté, est configuré pour réaliser le procédé selon l'une des revendications 1 à 11.

11

Collect
feature
information

10

Determine whether
the feature acquiring
device passes
authentication

Feture
information

Device information

Device
information

Reference results
of authentication

12

13

Perform
authentication on
the feature
acquiring device
according to the
device
information

Blockchain
network

Figure 1a

| Block body |
| --- |
| Version number |
| Feature value of input information |
| Timestamp |
| Difficulty |

Block
header

| Block body |
| --- |
| Feature value of block header of parent block |
| Version number |
| Feature value of input information |
| Timestamp |
| Difficulty |

Block
header

| Block body |
| --- |
| Feature value of block header of parent block |
| Version number |
| Feature value of input information |
| Timestamp |
| Difficulty |

Figure 1b

1. Monitor global input information by a node

2. Verify the input information, store the input information in a memory pool, and update a Hash tree

3. Update a timestamp

4. Try different random numbers

Process of generating a new block

5. Calculate a feature value

6. Repeat 2 to 5 until find a qualified feature value

7. Pack the block

8. Broadcast the new block

9. Write into a block chain after verification of other nodes

Figure 1c

Acquire device information of the feature acquiring device in response to a triggering operation for associating the feature acquiring device with a target application client in the at least two application clients — S201

Transmit the device information to the blockchain network, such that node devices in the blockchain network perform authentication on the feature acquiring device according to the device information to obtain one or more authentication results — S202

Acquire the one or more authentication results, each returned by a corresponding one of the node devices, from the blockchain network — S203

Associate the target application client with the feature acquiring device in response to determining that the feature acquiring device passes the authentication according to the authentication results — S204

Figure 2

Index

| | |
|---|---|
| 1 | |
| 2 | |
| 3 | |
| ... | |

| First block | | Second block | | Third block | | ... |

Figure 3

Acquire device information of a feature acquiring device in response to a triggering operation for associating the feature acquiring device with a target application client in the at least two application clients

S401

Transmit the device information to the blockchain network, so that node devices in the blockchain network perform authentication on the feature acquiring device according to the device information to obtain one or more authentication results

S402

Determine a first quantity of positive authentication results and a second quantity of node devices reporting normality in the blockchain network, where each positive authentication result is an authentication result indicating that a corresponding node device determines that the feature acquiring device passes the authentication

S403

Determine whether the feature acquiring device passes the authentication according to the first quantity and the second quantity

S404

Associate the target application client with the feature acquiring device in response to determining that the feature acquiring device passes the authentication

S405

Figure 4

Figure 5a

| Writing request stage | Broadcast stage | Preparation stage | Submission stage |

Figure 5b

601 Acquiring unit
602 Transmitting unit
603 Determining unit
606 Query unit
605 Memory unit
604 Associating unit

Apparatus for device management based on a blockchain network

Figure 6

Figure 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110143735 X
- CN 109660330 A
- CN 109327457 A